(19) **Europäisches Patentamt**

**European Patent Office**

**Office européen des brevets**

(11) **EP 1 444 824 B1**

(12) **EUROPEAN PATENT SPECIFICATION**

(45) Date of publication and mention
of the grant of the patent:
**25.01.2006 Bulletin 2006/04**

(51) Int Cl.:
*H04N 7/01* (2006.01)  *H04N 5/44* (2006.01)

(21) Application number: **02777612.9**

(22) Date of filing: **18.10.2002**

(86) International application number:
**PCT/IB2002/004342**

(87) International publication number:
**WO 2003/039147 (08.05.2003 Gazette 2003/19)**

(54) **EDGE ORIENTED INTERPOLATION OF VIDEO DATA**

KANTENINTERPOLATION VON VIDEODATEN

INTERPOLATION ORIENTEE CONTOURS DE DONNEES VIDEO

(84) Designated Contracting States:
**AT BE BG CH CY CZ DE DK EE ES FI FR GB GR
IE IT LI LU MC NL PT SE SK TR**

(30) Priority: **01.11.2001 EP 01204200**

(43) Date of publication of application:
**11.08.2004 Bulletin 2004/33**

(73) Proprietor: **Koninklijke Philips Electronics N.V.
5621 BA Eindhoven (NL)**

(72) Inventors:
• **LODDER, Rogier
NL-5656 AA Eindhoven (NL)**

• **DE HAAN, Gerard
NL-5656 AA Eindhoven (NL)**

(74) Representative: **Steenbeek, Leonardus Johannes
Philips
Intellectual Property & Standards
P.O. Box 220
5600 AE Eindhoven (NL)**

(56) References cited:
**EP-A- 0 396 229        EP-A- 0 565 948
WO-A-99/18727        GB-A- 2 268 659
US-A- 5 532 750**

**Description**

Spatial scaling is necessary whenever the number of pixels on a video line, or the number of video lines in an input video signal differs from the number required for display. This is in case an interlaced video signal has to be de-interlaced for providing a progressive video signal or when an aspect ratio has to be adapted as the display device requests a different ratio as the original signal can provide. High quality spatial scaling is achieved by up-scaling, using an interpolating low-pass filter. In this filter an input signal is at first sampled with a sampling frequency twice the desired bandwidth. The samples are interpolated and then decimated by zero-stuffing methods. The bandwidth of the input signal is not degraded, but also no additional spectral components can be used to improve the picture.

US 5,661,525 describes a method and an apparatus for converting, or de-interlacing a sequence of video frames which are represented using the interlaced scan format to a progressively scanned format. According to this disclosure, a plurality of interpolations are carried out on input video images. Pixels which need accurate interpolation are interpolated subsequent to pixels which do not need accurate interpolation. Interpolations are performed in this sequence to minimize the error of estimated pixel values. Each interpolation is weighted according to its estimated reliability. By weighting the interpolated values, the pixel values of a de-interlaced frame contain a minimized error.

The drawback of this method is that the computation effort is very high. By interpolating pixels with different interpolation methods, a large amount of data is generated. When each of these pixel values is weighted, computation overhead increases, which makes an apparatus for de-interlacing video images quite expensive. Another drawback of this prior art system is that for some interpolation methods it is not evident how to estimate the reliability.

GB-A-2268659 discloses an interlace to non-interlace conversion method. The method includes evaluating the degree of motion of a video area between the fields of input video signals by means of a motion evaluator, and generating an output frame at a position displaced (offset) from the field position of the input signals with time. Each picture element of an output frame is generated through a combination that depends on the estimated degree of motion of

a corresponding pixel obtained by means of a one-dimensional inter-frame interpolator which interpolates between the frames of the input signals and

a corresponding pixel obtained by means of a two-dimensional vertical axis/time base interpolator which interpolates between the fields of the input signals.

It is an object of the invention to provide a lean and inexpensive method and apparatus to interpolate pixel values between existing pixels of a video image that does not require estimation/calculation of the reliability of all interpolation methods. The invention is defined by the independent claims. The dependent claims define advantageous embodiments.

One example of an edge-dependent interpolation that is suitable for use in the present invention has been described in the article "Progressive scan conversion using edge information", by T. Doyle and M. Looymans, in Signal Processing of HDTV, II, L. Chiariglione (ed), 1990, pp. 711-721.

In case of edge oriented de-interlacing or spatial scaling, severe artefacts may occur in case an edge orientation has been estimated erroneously. As such edge orientation detection errors are unavoidable with currently known methods, particularly in picture parts with little detail, error correction should be carried out. By post processing an edge oriented interpolated image by mixing different interpolation methods according to the invention, good results are achieved. The more reliable an edge-dependent interpolation is, the less should the output of a different interpolator be used, and vice versa. By mixing interpolation results, the output is at least as good as it was previous to post-processing.

The result of an edge-dependent interpolation may be improved by a robust interpolation method that does not suffer from robustness problems. The drawbacks of the two interpolation methods level each other to some extent, so that the overall result can be improved. Second pixels are preferably interpolated based on motion compensated or motion adaptive or linear interpolation, as these interpolation methods guarantee a robust interpolation with good results. Blurring and other drawbacks of these interpolation methods are reduced. For example, the mix factor is used to mix the angular average and the original output from a second interpolator, i.e. a motion compensated de-interlacer. Only one de-interlacing method provides an error measure, and the mixing is done only according to that measure.

When the mix parameter is set such that the absolute difference between the overall output and the edge-dependent output is a constant fraction times the difference between existing pixels along the edge, the output is robust.

A mix factor according to claim 3 or 4 is further proposed. The constant may rely on the spatial position of the interpolated pixel between the existing pixels, which are the base for the interpolation. The essence is that the absolute difference between the output and the edge-dependent interpolated pixels equals a constant number of times, preferably two times if the interpolation output is halfway between the interpolation inputs, the absolute difference of the original pixels for edge-dependent interpolation.

According to claim 5 the mix factor depends on two values, i.e. first the angular difference, which is a measure for how accurately an edge has been found, and second the vertical or horizontal difference, which is a measure for how relevant the angular interpolation is at this point. A constant w may be used to put more emphasis on either the angular or the surrounding average, according to the needs of the particular application or to personal preferences. It is preferred that the mix factor is clipped to 1.

A further aspect of the invention is the use of a described method or a described device, in scan rate converters, in video compressors or in de-interlacing devices, display systems or television.

These and other aspects of the invention will become apparent from and be elucidated with reference to the embodiments described hereinafter.

In the drawings:

Fig. 1 shows a display matrix;
Fig. 2 shows a calculation of output pixels; and
Fig. 3 shows a block diagram of an implementation.

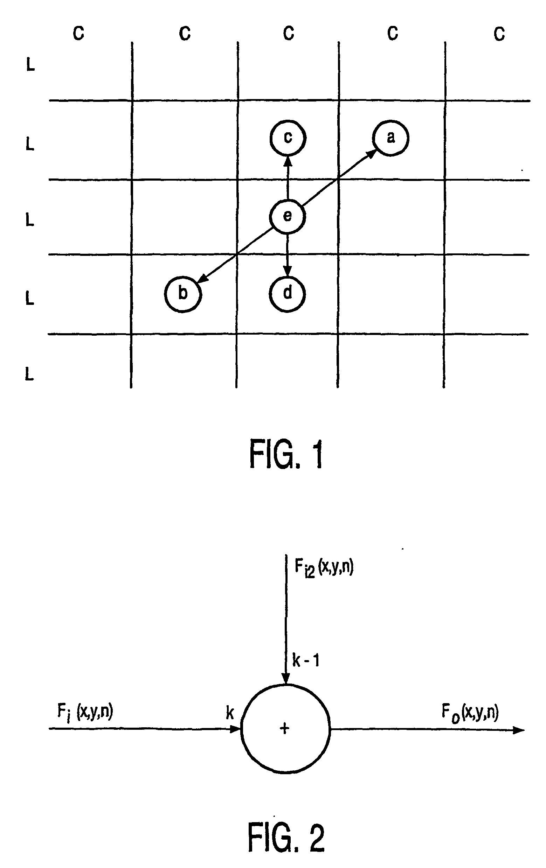

Fig. 1 depicts a display matrix with vertical lines L and horizontal columns C. Each intersection of lines L and columns C contains a pixel, which value is an eight-bit color representation of the original point in the image to be displayed. Depicted are pixels a, b, c, d, and e. Pixels a, b are along a detected edge of the image. Pixels c, d are vertically arranged around the pixel e, which is to be interpolated. As in interlaced video signals every second line L is not transmitted and the missing information is generated by interpolation, it is crucial that interpolation values come close to the original values. By interpolating along pixels a, b along an edge and pixels c, d vertically offset from the pixel e to be interpolated, the correctness of the calculated value is improved.

In Fig. 2, the calculation of an output value $F_0(x,y,n)$ by adding the output $F_i(x,y,n)$ of an edge-dependent interpolation and the output $F_{i2}(x,y,n)$ of a motion compensated interpolation with a mix factor k is shown. The output of an edge-dependent interpolation is $F_i(x,y,n)$, depending on the original pixel values a, b. When the interpolation angle is detected, it is possible to predict a from b and vice versa. If the interpolation pixel e has a position exactly in between a, and b the prediction error can be expected to be twice as small as the prediction error of b when predicted using a. That means that the correct value of e can deviate from one calculated with the interpolation angle, but this deviation is expected to be two times smaller than the absolute difference between the values of a, and b.

When improving the robustness of the edge-dependent interpolation, a second interpolation method is needed, which does not suffer from robustness problems. That may be linear interpolation along c, and d. By mixing the output of the second interpolation $F_{i2}(x,y,n)$ with the output of the edge-dependent interpolation $F_i(x,y,n)$, using a mixer as shown in Fig. 2, where k is set such that the absolute difference between $F_0(x,y,n)$ and $F_i(x,y,n)$ equals half the absolute difference of pixel values b, and a, interpolation results may be improved.

Formally the mix factor k is calculated by:

$$|a-b| = 2*|F_0(x,y,n) - F_i(x,y,n)|$$

The output is further defined by:

$$F_0(x,y,n) = kF_i(x,y,n) + (1-k)F_{i2}(x,y,n)$$

This leads to:

$$(1-k) = \frac{|a-b|}{2|F_{i2}(x,y,n) - F_i(x,y,n)| + \delta}$$

The value $\delta$ prevents from a division by zero. It is preferred that k is clipped to 1. The factor 2 in the denominator results from the distance relation between a, and b.

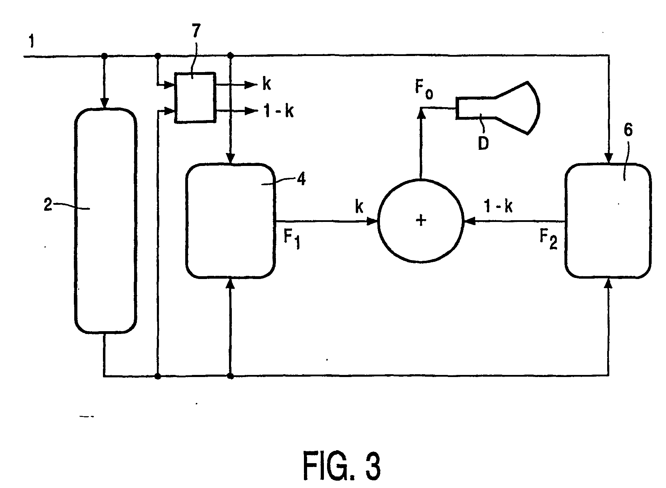

Fig. 3 depicts a block diagram of an implementation of an improved interpolator. An input signal 1 is fed to a line memory 2, where the values of pixels of lines are stored to allow interpolation in between lines. The input signal 1 is further fed to edge-dependent interpolation 4 and to line interpolation 6. The stored pixel values of previous lines are fed from line memory 2 to edge-dependent interpolation 4 and to line interpolation 6. The mix factors k and 1-k are calculated by mix factor calculation device 7. The output of edge-dependent interpolation 4 $F_i(x,y,n)$ is weighted with mix factor k. The output of line interpolation 6 is weighted with (1-k). These weighted output values are added and result in an output value $F_0(x,y,n)$ that is displayed by display device D.

By weighting the output values according to the invention, it is possible to provide interpolation results that depend on current picture characteristics. In case edge-dependent interpolation is superior to other interpolation methods, its results are emphasized, and vice versa.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

Reference signs:

| a, b, c, d | original pixels |
| e | interpolated pixel |
| k | mix factor |
| C | columns |
| L | lines |
| $F_i(x,y,n)$ | output of edge-dependent interpolation |
| $F_{i2}(x,y,n)$ | output of line averaging interpolation |
| $F_0(x,y,n)$ | interpolation output |
| 1 | input signal |
| 2 | line memory |
| 4 | edge-dependent interpolation |
| 6 | line averaging interpolation |
| 7 | mix factor calculation device |
| D | display device |

**Claims**

1. A method for error reduction of edge oriented spatial interpolation of video images, the method comprising the steps of:

   interpolating a first interpolated pixel ($F_1$) in a first manner,
   interpolating a second interpolated pixel ($F_2$) in a second manner different from the first manner, and
   generating an output interpolated pixel ($P_0$) by mixing pixel values of said first interpolated pixel ($F_1$) and said second interpolated pixel ($F_2$) in accordance with a mix factor (k),
   **characterized in that** said first manner includes interpolating the first interpolated pixel ($F_1$) between existing pixels (a, b) along a spatial edge in said video image, and **characterized by** the further steps of:
   measuring a first absolute difference |a-b| between pixel values of said existing pixels (a, b) along said spatial edge, and
   calculating said mix factor (k) in dependence on said first absolute difference.

2. A method according to claim 1, further comprising the step of measuring a second absolute difference between pixel values of said output interpolated pixel (Fo) and said first interpolated pixel (Fi), and wherein said mix factor (k) is calculated such that said second absolute difference is a constant times said first absolute difference.

3. A method according to claim 2, wherein said constant depends on the spatial position relative to said existing pixels along said spatial edge.

4. A method according to claim 3, wherein said constant is 2 in case said interpolated output pixel is interpolated spatially halfway between said existing pixels along said edge.

5. A method according to claim 1, further comprising the step of measuring a second absolute difference Ic-dI between values of pixels (c, d) horizontally or vertically surrounding said output pixel (e), and wherein said mix factor is calculated such that it depends on $|a-b|/(w*|c-d|)$, where w is a constant.

6. A device for interpolating pixels between existing pixels in video images, the device comprising:

first interpolation means (4) for interpolating a first interpolated pixel ($F_1$) in a first manner,
second interpolation means (6) for interpolating a second interpolated pixel ($F_2$) in a second manner different from the first manner, and
mixing means (+) for generating an output interpolated pixel ($F_0$) by mixing pixel values of said first interpolated pixel ($F_1$) and said second interpolated pixel ($F_2$) in accordance with a mix factor (k),
**characterized in that** said first manner includes interpolating the first interpolated pixel ($F_1$) between existing pixels (a, b) along a spatial edge in said video image, and **characterized by** calculation means (7) for:
measuring a first absolute difference Ia-bI between pixel values of said existing pixels (a, b) along said spatial edge, and
calculating said mix factor (k) in dependence on said first absolute difference.

7. Display apparatus, comprising:

an interpolating device according to claim 6; and
a display device (D) for displaying the output signal (Fo).

**Patentansprüche**

1. Verfahren zur Fehlerreduktion bei randorientierter räumlicher Interpolation von Videobildern, wobei das Verfahren die nachfolgenden Verfahrensschritte umfasst:

- das Interpolieren eines ersten interpolierten Pixels ($F_1$) auf eine erste Art und Weise,
- das Interpolieren eines zweiten interpolierten Pixels ($F_2$) auf eine zweite Art und Weise, die anders ist als die erste Art und Weise,
- das Erzeugen eines interpolierten Ausgangspixels ($F_0$) durch Mischung von Pixelwerten des genannten ersten interpolierten Pixels ($F_1$) und des genannten zweiten interpolierten Pixels ($F_2$) entsprechend einem Mischfaktor (k),
**dadurch gekennzeichnet, dass** die genannte erste Art und Weise das Interpolieren des ersten interpolierten Pixels ($F_1$) zwischen bestehenden Pixeln (a, b) längs eines räumlichen Randes in dem genannten Videobild umfasst, und **gekennzeichnet durch** die nachfolgenden Verfahrensschritte:
- das Messen einer ersten absoluten Differenz |a-b| zwischen Pixelwerten der genannten bestehenden Pixeln (a, b) längs des genannten räumlichen Randes, und
- das Berechnen des genannten Mischfaktors (k) in Abhängigkeit von der genannten ersten absoluten Differenz.

2. Verfahren nach Anspruch 1, das weiterhin den nachfolgenden Verfahrensschritt umfasst: das Messen einer zweiten absoluten Differenz zwischen Pixelwerten des genannten interpolierten Ausgangspixels (Fo) und des genannten ersten interpolierten Pixels (Fi), und wobei der genannte Mischfaktor (k) derart berechnet wird, dass die genannte zweite absolute Differenz eine konstante Anzahl Male der genannten ersten absoluten Differenz ist.

3. Verfahren nach Anspruch 2, wobei die genannte Konstante von der räumlichen Lage gegenüber den genannten bestehenden Pixeln längs des genannten räumlichen Randes abhängig ist.

4. Verfahren nach Anspruch 3, wobei die genannte Konstante in dem Fall, dass das genannte interpolierte Ausgangspixel räumlich halbwegs zwischen den genannten bestehenden Pixeln längs des genannten Randes interpoliert wird, 2 ist.

5. Verfahren nach Anspruch 1, wobei dieses Verfahren weiterhin den nachfolgenden Verfahrensschritt umfasst: das Messen einer zweiten absoluten Differenz |c-d| zwischen Werten von Pixeln (c, d), die das genannte Ausgangspixel (c) horizontal oder vertikal umgeben und wobei der genannte Mischfaktor derart berechnet wird, dass dieser von $|a-b| / (w*|c-d|)$ abhängig ist, wobei w eine Konstante ist.

**6.** Anordnung zum Interpolieren von Pixeln zwischen bestehenden Pixeln in Videobildern, wobei die Anordnung die nachfolgenden Elemente umfasst:

- erste Interpolationsmittel (4) zum Interpolieren eines ersten interpolierten Pixels ($F_1$) auf eine erste Art und Weise,
- zweite Interpolationsmittel (6) zum Interpolieren eines zweiten interpolierten Pixels ($F_2$) auf eine zweite Art und Weise, die anders ist als die erste Art und Weise, und
- Mischmittel (+) zum Erzeugen eines interpolierten Ausgangspixels (Fo) durch Mischung von Pixelwerten des genannten ersten interpolierten Pixels ($F_1$) und des genannten zweiten interpolierten Pixels ($F_2$) entsprechend einem Mischfaktor (k),
**dadurch gekennzeichnet, dass** die genannte erste Art und Weise das Interpolieren des ersten interpolierten Pixels ($F_1$) zwischen bestehenden Pixeln (a, b) längs eines räumlichen Randes in dem genannten Videobild umfasst, und **gekennzeichnet durch** Berechnungsmittel (7) zum:
- Messen einer ersten absoluten Differenz |a-b| zwischen Pixelwerten der genannten bestehenden Pixel (a, b) längs des genannten räumlichen Randes, und
- Berechnen des genannten Mischfaktors (k) in Abhängigkeit von der genannten,ersten absoluten Differenz.

**7.** Wiedergabeanordnung, weiche die nachfolgenden Elemente umfasst:

- eine Interpolationsanordnung nach Anspruch 6, und
- eine Wiedergabeanordnung (D) zum Wiedergeben des Ausgangssignals (Fo).

**Revendications**

**1.** Procédé de réduction d'erreur d'une interpolation spatiale orientée suivant les bords d'images vidéo, le procédé comprenant les étapes suivantes :

interpolation d'un premier pixel interpolé (F1) d'une première manière,
interpolation d'un second pixel interpolé (F2) d'une seconde manière différente de la première manière, et
production d'un pixel interpolé de sortie (F0) en mélangeant des valeurs de pixels dudit premier pixel interpolé (F1) et dudit second pixel interpolé (F2) en fonction d'un facteur de mélange (k),
**caractérisé en ce que** ladite première manière comprend l'interpolation du premier pixel interpolé (F1) entre des pixels existants (a, b) le long d'un bord spatial dans ladite image vidéo, et **caractérisé par** les étapes supplémentaires suivantes :
mesure d'une première différence absolue |a - b| entre des valeurs de pixels desdits pixels existant (a, b) le long dudit bord spatial, et
calcul dudit facteur de mélange (k) en fonction de ladite première différence absolue.

**2.** Procédé selon la revendication 1, comprenant en outre l'étape de mesure d'une seconde différence absolue entre des valeurs de pixels dudit pixel interpolé de sortie (F0) et ledit premier pixel interpolé (Fi), et **caractérisé en ce que** ledit facteur de mélange (k) est calculé de façon à ce que ladite seconde différence absolue soit une constante multipliée par ladite première différence absolue.

**3.** Procédé selon la revendication 2, **caractérisé en ce que** ladite constante dépend de la position spatiale par rapport auxdits pixels existants le long dudit bord spatial.

**4.** Procédé selon la revendication 3, **caractérisé en ce que** ladite constante est égale à 2 dans le cas où ledit pixel de sortie interpolé est interpolé spatialement à mi-chemin entre lesdits pixels existants le long dudit bord.

**5.** Procédé selon la revendication 1, comprenant en outre l'étape de mesure d'une seconde différence absolue | c - d| entre les valeurs de pixels (c, d) entourant horizontalement ou verticalement ledit pixel de sortie (e), et **caractérisé en ce que** ledit facteur de mélange est calculé de façon à ce qu'il dépende de |a - b| /| (w*| c - d|), où w est une constante.

**6.** Dispositif d'interpolation de pixels entre des pixels existants dans des images vidéo, le dispositif comprenant :

des premiers moyens d'interpolation (4) pour interpoler un premier pixel interpolé (F1) d'une première manière,
des seconds moyens d'interpolation (6) pour interpoler un second pixel interpolé (F2) d'une seconde manière différente de la première manière, et

des moyens de mélange (+) pour produire un pixel interpolé de sortie (F0) en mélangeant des valeurs de pixels dudit premier pixel interpolé (F1) et dudit second pixel interpolé (F2) selon un facteur de mélange (k), **caractérisé en ce que** ladite première manière comprend l'interpolation du premier pixel interpolé (F1) entre des pixels existants (a, b) le long d'un bord spatial dans ladite image vidéo, et **caractérisé par** des moyens de calcul (7) pour :

mesurer une première différence absolue |a- b| entre des valeurs de pixels desdits pixels existants (a, b) le long dudit bord spatial, et

calculer ledit facteur de mélange (k) en fonction de ladite première différence absolue.

7. Appareil d'affichage, comprenant :

un dispositif d'interpolation selon la revendication 6 ; et
un dispositif d'affichage (D) pour afficher le signal de sortie (F0).

FIG. 1

FIG. 2

FIG. 3